# EUROPEAN PATENT APPLICATION

(11) **EP 3 462 527 A2**
(43) Date of publication of application: **03.04.2019**
(21) Application number: 18195326.6
(22) Date of filing: 19.09.2018
(51) Int. Cl.: H01M 4/86, H01M 4/88, H01M 4/92

(54) **CATALYST LAYER, FUEL CELL USING SAME, AND METHOD FOR PRODUCING SAME**

(30) Priority: 02.10.2017 JP 2017192389
(71) Applicant: Panasonic Intellectual Property Management Co., Ltd., Osaka-shi, Osaka 540-6207 (JP)
(72) Inventor: TSUCHIDA, Shuzo, Osaka, 540-6207 (JP); SEKI, Ryouhei, Osaka, 540-6207 (JP); UEYAMA, Yasuhiro, Osaka, 540-6207 (JP)
(74) Representative: Vigand, Philippe

(57) **Abstract**

A catalyst layer, includes: a carrier; metal particles located over the carrier; an underlayer located on the carrier; and an ionomer-based layer located over the underlayer, wherein the underlayer includes a polymer material, and covers at least parts of the metal particles, and the ionomer-based layer includes a proton-conducting resin. A fuel cell electrode includes the catalyst layer, and a fuel cell including the above catalyst layer. A method for producing a catalyst layer, includes: bringing at least one first solution including a polymer material into contact with a metal-particle-supported carrier to form an underlayer; and bringing a second solution including a proton-conducting resin into contact with the metal-particle-supported carrier to coat said metal-particle-supported carrier with the proton-conducting resin.

## Description

### TECHNICAL FIELD

The technical field relates to catalyst layers, fuel cells using the same, and a method for producing the same.

### BACKGROUND

In recent years, polymer electrolyte fuel cells have been employed in automobiles.

As a result, there has been an increasing demand for improvements on durability of polymer electrolyte fuel cells.

In fact, attempts at improvements of durability of polymer electrolyte fuel cell have been pursued.

Through such attempts, for example, the following technology has been developed. That is, the following is a countermeasure taken in fuel cells against deteriorations in fuel cells.

In order to realize sufficient power generation performance of fuel cells, metal particle-supported carriers that are formed by way of supporting, onto carriers, metal particles having catalysis performance need to be coated with proton-conducting resins.

A specific structure thereof will be described below.

If processes of power generation are repeated in the structure, the proton-conducting resins on the carriers will be eliminated, and thus, their power generation performance will be deteriorated.

As a countermeasure for such a problem, adhesive layers are formed between the carrier and the proton-conducting resins.

A disclosure of JP-A-2013-179030 will now be described with reference to FIGS. 10A and 10B.

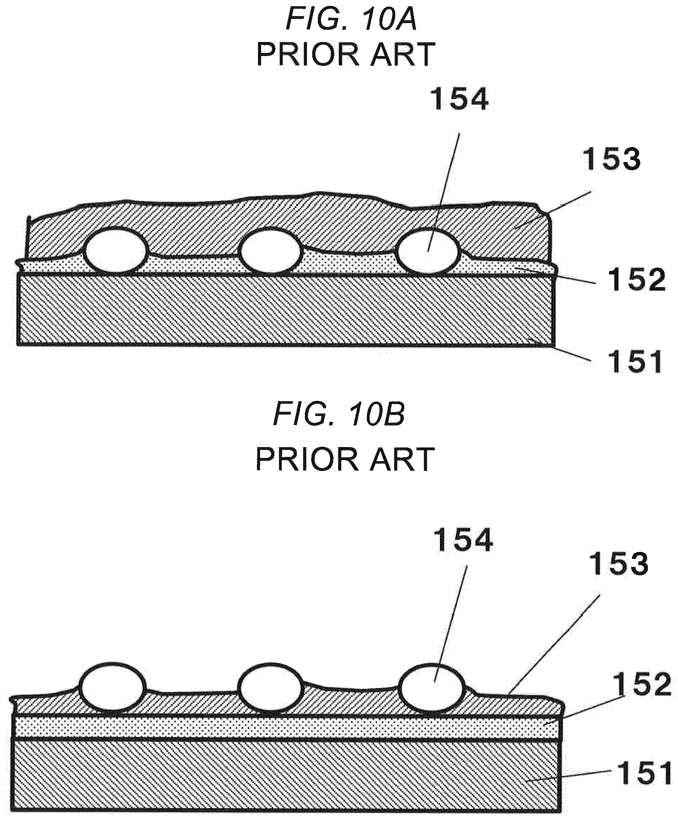

FIGS. 10A and 10B are diagrams that each show structures of surfaces of carbon-based carriers 151 in catalyst layers.

The carbon-based carriers 151 may be formed in fiber or spherical shapes. However, the carbon-based carriers 151 are depicted schematically as rectangles.

In JP-A-2013-179030, underlayers 152 that are made of polymer materials are formed on surfaces of the carbon-based carriers 151, which serve as carriers, and ionomer-based layers 153 that are made of proton-conducting resins are placed on the underlayers 152.

Furthermore, metal particles 154 are provided between the underlayers 152 and the the ionomer-based layer 153 as shown in FIG. 10A, or are provided on the ionomer-based layers 153 as shown in FIG. 10B.

### SUMMARY

However, according to the structures disclosed in JP-A-2013-179030, the following concerns would arise.

Areas where the ionomer-based layers 153 are brought into contact with the metal particles 154 will be large.

Furthermore, polymer materials having sulfonic acid groups as side chains are generally employed for the ionomer-based layers 153.

However, the sulfonic acid groups will be adsorbed onto atoms present on surfaces of the metal particles 154. Consequently, the sulfonic acid groups will cover the surfaces, on which deliver catalysis performance of the metal particles 154, and thus, the catalysis performance will be deteriorated.

Therefore, in order to solve the above-mentioned problem, an object of the disclosure is to provide catalyst layers that hardly exhibit deteriorations in the catalysis performance, fuel cells using the same, and methods for producing the same.

In order to achieve the above object, according to a first aspect of the disclosure, provided is a catalyst layer, including: a carrier; metal particles located over the carrier; an underlayer located on the carrier; and an ionomer-based layer located over the underlayer, wherein the underlayer includes a polymer material, and covers at least parts of the metal particles, and the ionomer-based layer includes a proton-conducting resin.

Moreover, according to a second aspect of the disclosure, provided is a fuel cell electrode, including the catalyst layer.

Furthermore, according to a third aspect of the disclosure, further provided is a fuel cell including the above catalyst layer.

Additionally, according to a fourth aspect of the disclosure, further provided is a method for producing a catalyst layer, including: (i) bringing at least one first solution including a polymer material into contact with a metal-particle-supported carrier to form an underlayer; and (ii) then bringing a second solution including a proton-conducting resin into contact with the metal-particle-supported carrier subjected to Step (i) to coat said metal-particle-supported carrier with the proton-conducting resin.

According to the disclosure, it becomes possible to improve durability of fuel cells without causing deteriorations in power-generation properties.

### BRIEF DESCRIPTION OF THE DRAWINGS

FIG. 1 is a configuration view of a catalyst layer according to one embodiment.
FIG. 2 is a view that shows one single cell in a fuel cell in one embodiment.
FIGS. 3A-3D are cross-section views that describe a first production method.
FIG. 4 is a flowchart that describes the first production method.
FIGS. 5A-5E are cross-section views that describe a second production method.
FIG. 6 is a flowchart that describes the second production method.
FIG. 7 is a configuration view of a catalyst layer produced by the second production method.
FIG. 8 is a diagram that shows a state of a surface of a carbon material in the first production method.
FIG. 9 is a diagram that shows a state of a surface of a carbon material in a third production method.
FIGS. 10A and 10B are cross-section views of carbon-based carriers in conventional catalyst layers.

### DESCRIPTION OF EMBODIMENTS

Hereinafter, embodiments of the disclosure will be described with reference to the drawings and tables.

In all of the drawings, the same or corresponding parts may be donated with the same reference symbols and overlapping descriptions therefor may be omitted.

In additions, although the disclosure will be described in detail, the disclosure is not limited to the descriptions below. In other words, other embodiments, versions, and modifications within the scope of the present disclosure are possible.

### <Catalyst layer 163>

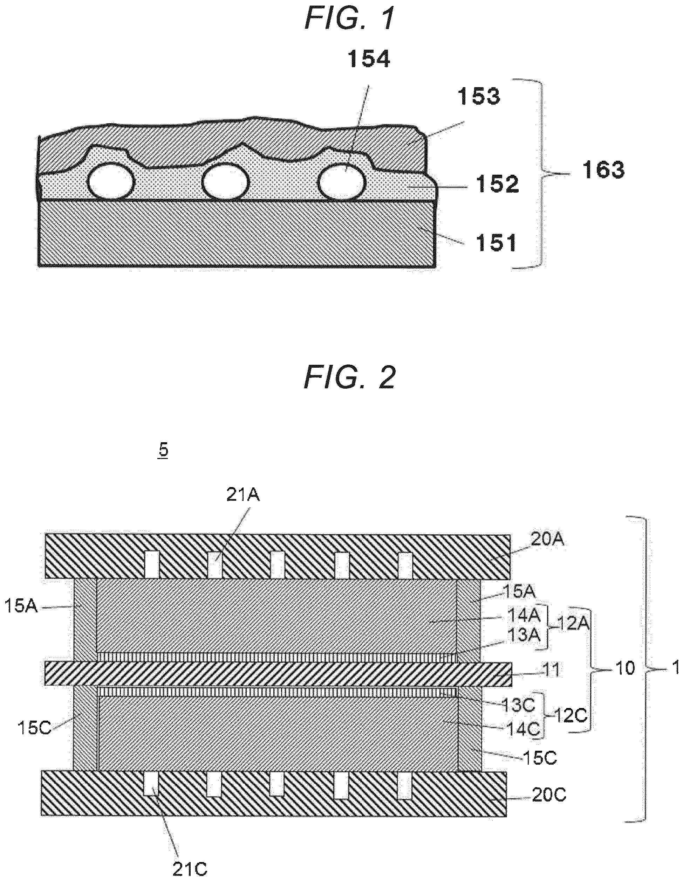

FIG. 1 is a cross-section view of a catalyst layer according to a first embodiment.

The catalyst layer 163 includes a carbon-based carrier 151, and metal particles 154 supported on the surface of the carbon-based carrier 151.

An underlayer 152 that may include a polymer material including nitrogen (N) and/or oxygen (O) atoms is formed on/over the carbon-based carrier 151 and the metal particles 154.

An ionomer-based layer 153 that includes a proton-conducting resin (generally called as "proton-conducting polymer material", or "ionomer") is formed on the underlayer 152.

The ionomer-based layer 153 includes (or may be made of) polymer materials that protons can transmit through. Examples of such polymer materials include perfluorocarbon sulfonic acid resins.

In the catalyst layer 163 according to this embodiment, the ionomer-based layer 153 is not brought into contact with the metal particles 154, or areas of the ionomer layer 153 contacting the metal particles 154 are smaller. Accordingly, catalytic activity of the metal particles 154 hardly deteriorates.

Overall structures of fuel cells, and methods for producing catalyst layers 163 will be described below.

### <Structure of a fuel cell >

FIG. 2 is a cross-section view that shows one single cell in a fuel cell 5 according to one embodiment of the disclosure.

In the fuel cell 5, a fuel gas containing a hydrogen gas, and an oxidant gas containing an oxygen gas (e.g., the air) are electrochemically reacted with each other.

This means that the fuel cell 5 serves as a polymer electrolyte fuel cell that simultaneously produces electric power and heat.

Additionally, fuel cells 5 according to the disclosure are not limited to the form of polymer electrolyte fuel cell. In other words, the fuel cells 5 according to the disclosure can be configured as various types of fuel cells.

As shown in FIG. 2, the fuel cell 5 includes a membrane electrode assembly 10 (MEA), and a pair of tabular anode separators 20A and 20C that are each located on both surfaces of the membrane electrode assembly 10.

FIG. 2 shows one single cell included in the fuel cell 5, and multiple cells each having the same configuration are stacked in the fuel cell 5.

The membrane electrode assembly 10 includes a polymer electrolyte membrane 11 that selectively transports, and a pair of electrode layers that are each formed on both surfaces of the polymer electrolyte membrane 11.

One of the electrode layers is an anode 12A (also called a fuel electrode), and the other is a cathode 12C (also called an air electrode).

The anode 12A is formed on one surface of the polymer electrolyte membrane 11.

The anode 12A includes: an anode catalyst layer 13A containing as a main ingredient a platinum-group-catalyst-supported carbon powder; and an anode gas-diffusion layer 14A that is formed on the anode catalyst layer 13A and that combines current-collection function, gas permeability, and water repellency.

The cathode 12C is formed on the other surface of the polymer electrolyte membrane 11.

The cathode 12C includes: a cathode catalyst layer 13C that contains as a main ingredient a platinum-group-catalyst-supported carbon powder; and a cathode gas-diffusion layer 14C that is formed on the cathode catalyst layer 13C and that combines current-collection function, gas permeability, and water repellency.

On a main surface of the anode separator 20A, which is located adjacent to the anode 12A, fuel-gas flow channels 21A, through which a fuel gas is caused to pass, are provided. In that case, the main surface of the anode separator 20A refers to a surface that is brought into contact with the anode gas-diffusion layer 14A.

On a main surface of the cathode separator 20C, which is located adjacent to the cathode 12C, oxidant-gas flow channels 21C, through which an oxidant gas is caused to flow, are provided. In that case, the main surface refers to a surface that is brought into contact with the cathode gas-diffusion layer 14C.

The fuel gas is supplied to the anode 12A through the fuel-gas flow channels 21A, and also, the oxidant gas is supplied to the cathode 12C through the oxidant-gas flow channel 21C.

Resulting reactants produced in the anode 12A and the cathode 12C cause an electrochemical reaction, and thus, electric power and heat are produced.

In that case, in order to cause the electrochemical reaction more efficiently, it would be important to humidify the fuel gas and the oxidant gas, thereby maintaining certain degrees of water-retentions states of the anode 12A and the cathode 12C.

This is because the reactants are transmitted through water. Conditions for the humidification may appropriately be adjusted depending on a configuration and/or a specification of the fuel cell 5.

An anode separator seal 15A serving as a seal material is provided between the anode separator 20A and the polymer electrolyte membrane 11 such that the anode separator seal 15A covers lateral surfaces of the anode catalyst layer 13A and the anode gas-diffusion layer 14A, in order to prevent the fuel gas from leaking to the outside.

Furthermore, a cathode separator seal 15C serving as seal material is provided between the cathode separator 20C and the polymer electrolyte membrane 11 such that the cathode separator seal 15C covers lateral surfaces of the cathode catalyst layer 13C and the cathode gas-diffusion layer 14C, in order to prevent the oxidant gas from leaking to the outside.

General thermoplastic resins, thermosetting resins, and the like may be employed for the anode separator seal 15A and the cathode separator seal 15C.

### <Method for producing anode and cathode catalyst layers 13A and 13C>

### (First production method)

In the disclosure, the catalyst layer depicted in FIG. 1 may be employed for each of the anode and cathode catalyst layers 13A and 13C depicted in FIG. 2.

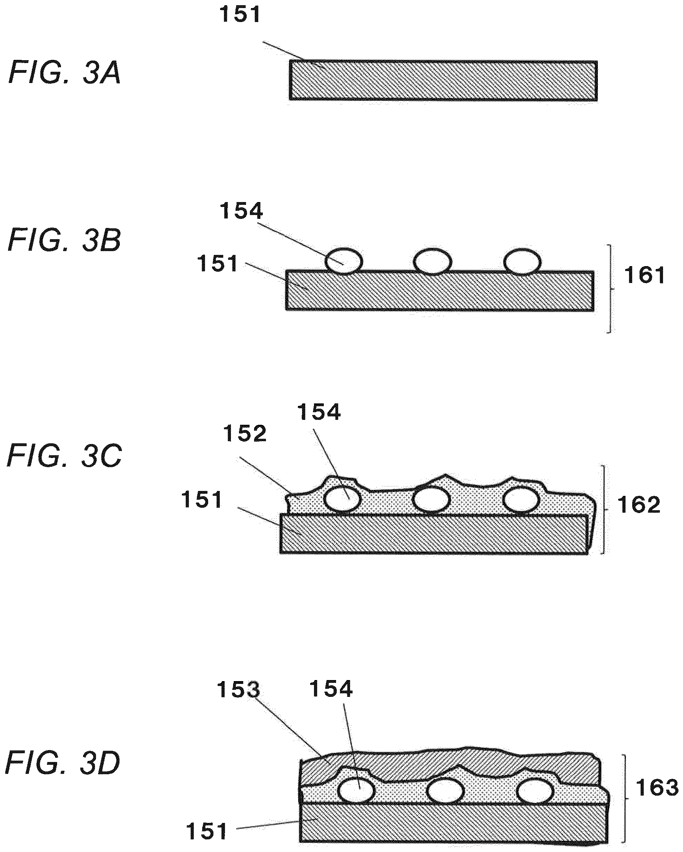

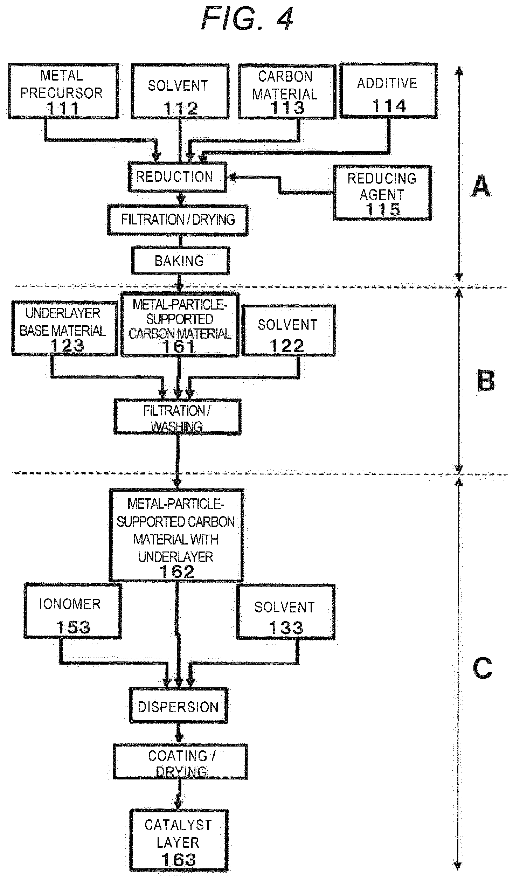

A method for producing the catalyst layers will be described with reference to FIGS. 3 and 4.

FIGS. 3A-3D are cross-section views that illustrate flows of production steps.

FIG. 4 is a flowchart showing production procedures.

### (i) Supporting metal particles onto a carbon material ("A" in FIG. 4)

Metal particles 154 at least containing platinum are supported onto a carbon material 151 (FIG. 3A).

In that case, techniques employed for supporting metal particles 154 thereon are not particularly limited.

For example, a method in which at least one metal salt serving as a metal precursor 111 is dissolved in a certain solvent 112, and then, a carbon material 113 is dispersed in the resulting solution may be employed.

A certain additive 114 may be employed as needed.

The metal is reduced by use of a reducing agent 115 to cause metal particles 154 to deposit on the carbon material 113.

Then, the resulting product is subjected to separation based on filtration, washing, and drying, thereby obtaining a metal-particle-supported carbon material 161 (FIG. 3B).

Additionally, two or more metal salts may be employed so as to cause the metal salts to deposit on the carbon material 113 at the same time or sequentially, and thus, multiple types of metal particles may be supported on the carbon material 113.

Furthermore, the two or more metal salts may be formed into alloys based on high-temperature treatment (e.g., 500°C to 900°C).

### (ii) Forming an underlayer ("B" in FIG. 4)

A metal supported carbon material 161 that is obtained by supporting metal particles 154 on the carbon-based carrier 151 is dispersed in a solvent 122 containing an underlayer base material 123 in a dissolved state.

The resulting product is stirred for a certain period of time, and then, is subject to filtration-based separation, thereby obtaining a solid content, i.e. , the metal-particle-supported carbon material 161 onto which a solution for the underlayer 152 adheres.

The resulting material is subjected to washing based on a solvent, drying, and a heat treatment, thereby obtaining a metal-particle-supported carbon material 162 in which an underlayer 152 is formed (FIG. 3C).

### (iii) Forming an ionomer-based layer ("C" in FIG. 4)

An ionomer 153 is dissolved in a certain solvent 133 to obtain a coating liquid.

The metal-particle-supported carbon material 162, in which the underlayer 152 has been formed, is soaked in the coating liquid.

In this way, an ionomer-based layer 153 is formed on the underlayer 152 in the metal-particle-supported carbon material 162, thereby producing a catalyst layer 163 (FIG. 3D).

Thus, the catalyst layer is produced by way of successively carrying out the steps of supporting metal particles onto a carbon material ("A" in FIG. 4), forming an underlayer ("B" in FIG. 4), and forming an ionomer-based layer ("C" in FIG. 4).

### <Details on methods for producing anode and cathode catalyst layers 13A and 13C>

Methods for producing anode and cathode catalyst layers will be described more in detail.

In particular, specific embodiments in which platinum particles are supported onto carbon materials as the metal particles 154 will be described below.

However, not only platinum particles but also alloy particles or core-shell particles using other metals may be employed in the disclosure. The disclosure is not limited to the embodiments described below.

### [i] supporting metal particles onto a carbon material

In the flow shown in the part of A in FIG. 4, a metal precursor 111 that serves as a base material for metal particles 154, a carbon material 113, and optionally an additive 114 may be mixed/dispersed in a solvent 12, and then, the resulting mixture solution may be stirred at a certain temperature for a predetermined period of time.

In addition, more specifically, the mixture solution may be stirred at about 30-40°C while adjusting the pH of the mixture solution to a range from about 4 to about 10.

In that case, a reason why the pH of the mixture solution is adjusted to such a range is because the zeta potential of the surface of the carbon material 113, or solubility of the metal precursor is suppressed so as to uniformly disperse or dissolve the metal precursor 111, and the carbon material 113. However, the pH is not limited to the above-mentioned range.

The pH of the mixture solution may be adjusted depending on types of materials employed therein.

Then, a reducing agent 115 is added to the mixture solution so as to cause metal ions constituting the metal precursor 111 to reduce on the carbon material 113.

Accordingly, the structure shown in FIG. 3B can be obtained.

That is, the metal particles 154 are supported on to the carbon-based carrier 151.

Subsequently, solid contents are separated by way of filtration, and then, solvents or impurities that have adhered onto surfaces of the solid contents in the foregoing steps are removed by way of washing, thereby obtaining a metal-particle-supported carbon material 161.

Then, the metal-particle-supported carbon material 161 may be subjected to drying, and/or a heat treatment such as a baking treatment to dry the product.

General techniques may be employed for the steps of washing, drying, and baking. Techniques employed for these steps are not particularly limited.

Materials used in the step of supporting metal particles ("A" in FIG. 4) will further be described below.

### [Metal precursor 111]

In some embodiments, platinum-group-metal particle-supported catalysts using platinum-group particles as metal particles 154 may be prepared.

As examples of metal precursors 111 used for such embodiments, platinum-group inorganic compounds (e.g., oxides, nitrates, and sulfates of platinum-group metals), halides of platinum-group metals (e.g., chlorides of platinum group metals), organic acid salts of platinum-group metals (e.g., acetates of platinum-group metals), complex salts of platinum-group metals (e.g., amine complexes of platinum-group metals), and organic metal compounds of platinum-group metals (e.g., acetylacetonate complexes of platinum-group metals) can be mentioned.

Alternatively, platinum-group metals may be dissolved in reaction solutions.

Additionally, platinum-group metals include Ru, Rh, Pd, Os, Ir, etc. besides Pt, as commonly known.

Among others, inorganic compounds containing platinum-group metals, halides of platinum-group metals, or organic metal compounds containing platinum-group metals are preferably employed, and, more specifically, chlorides of platinum-group metals are preferably employed, for the metal precursor 111.

In addition, for the metal precursor 111, one type of material may be employed singularly. Alternatively, any two or more types of materials may be combined at any ratios therefor.

### [Solvent 112]

A type of solvent 112 is not limited as long as it does not depart from the scope of the disclosure. In general, water, and/or organic solvents may be employed therefor.

As examples of organic solvents, alcohols such as methanol, ethanol, 1-propanol, and 2-propanol can be mentioned.

Among others, water (particularly, distilled water or ion-exchange water) is preferably employed for the solvent 112 because it makes it easier to control the pH.

In addition, for the solvent 112, one type of material may be employed singularly. Alternatively, any two or more types of materials may be combined at any ratios therefor.

However, when organic solvents such as alcohols are combined with water, a proportion of the organic solvents is preferably 50% or smaller relative to the total volume because it makes it easier to control the pH.

### [Carbon material 113]

For the carbon material 113, at least one carbon material selected from the group consisting of carbon black, graphite, graphene, carbon nanotubes, and carbon fibers may be employed.

Among others, carbon black is preferably employed.

### [Additive 114]

Next, the additive 114 will be described.

The additive 114 may be employed for the purpose of dispersing/dissolving the carbon material 113 and the metal precursor 111 uniformly in the solvent.

Therefore, for the additive 114, any materials that can dissolve or disperse in the solvent 112, that do not impede solubility of the metal precursor 111 in the solvent 112, that improve compatibility of the carbon material 113 with the solvent 112, and that do not cause the metal particles 154 and the carbon material 113 to aggregate in subsequent steps, need to be selected.

Any agents called general complexing agents, dispersing agents, and/or surfactants can be employed for the additive 114 as long as they fulfill the above-mentioned conditions.

Specific examples of complexing agents, compounds including a nitrogen or oxygen atom [e.g., ethylenediamine (EDA; H₂N(CH₂)₂NH₂), and diethanolamine (DEA; (HOCH₂CH₂)₂NH)] can preferably be mentioned.

Furthermore, as examples of surfactants, compounds including a hydrophilic amino group, and a hydrophobic hydrocarbon [e.g., hexadecyltrimethylammonium bromide (CTAB; (CH₃ (CH₂) 15N(CH₃)₃Br)] can preferably be mentioned.

Additionally, any compounds that combine both of properties of complexing agents and surfactants can also be employed. Types of complexing agents and surfactants are not limited.

### [Reducing agent 115]

A type of the reducing agent 115 is not limited as long as it is soluble in the solvent in which the metal precursor 111 and the carbon material 113 are dissolved/dispersed.

Specific examples of reducing agents 115 include nitrogen compounds such as hydrazine, boron compounds such as sodium borohydride, aldehydes such as formaldehyde, L-ascorbic acid and similar carboxylic acids, and alcohols such as methanol can be mentioned.

Among others, sodium borohydride, and hydrazine are preferably used for the reducing agent 115.

Additionally, for the reducing agent 115, one type of material may be employed singularly. Alternatively, any two or more types of materials may be combined at any ratios therefor.

An amount of the reducing agent 115 is preferably adjusted so as to be able to sufficiently reduce the metal precursor 111 to metals.

In general, one or more equivalents of the reducing agent may be employed relative to one equivalent of the metal precursor 111.

In order to obtain sufficient efficiencies of reduction, preferably 1.2 or more, more preferably 1.5 or more, still more preferably 2 or more equivalents of the reducing agent 115 may be used relative to one equivalent of the metal precursor 111.

Furthermore, in consideration of post-treatments of unreacted reducing agent 115, an upper limit for the amount of the metal precursor 111 may be preferably 500 equivalents, more preferably 100 equivalents, still more preferably 40 equivalents, relative to one equivalent of the metal precursor 111.

Additionally, a technique used for adding the reducing agent 15 to the reaction mixture is not limited.

### (ii) Forming an underlayer

In the flow shown in the part of "B" in FIG. 4, the metal-particle-supported carbon material 161 obtained in the above-described step of supporting metal particles onto a carbon material is dispersed in a certain solvent 122, and then, a solution in which an underlayer base material 123 is dissolved is further added to the mixture solution. The resulting mixture solution is stirred at a predetermined temperature for a certain period of time.

In that case, for the solvent 122, any solvent materials that the underlayer base material 123 is soluble in may be used.

Additionally, a concentration of the base material 123 dissolved in the solvent 122, and stirring conditions such as a temperature, and a period of time, may be adjusted depending on a desirable type of the underlayer 152, a desirable thickness of the coating on the metal-particle-supported carbon material, etc.

For stirring the mixture solution, any types of techniques may be selected. For example, a technique in which the solution is rotated and mixed using a stirring element, and a technique in which the solution is irradiated with ultrasonic waves may be employed.

### [Underlayer 152]

In some embodiments, a resin containing N and/or O in its molecular structure may be used as an underlayer base material 123.

Furthermore, the base material for the underlayer is not particularly limited as long as it is difficult to deteriorate during power generation in the fuel cell. In general, materials that are difficult to decompose therein are preferably used.

As examples of polymer resins containing N, and main chains including aromatic or heterocyclic rings, thereby securing heat resistance, polyimides (PI), and polybenzimidazole (PBI) can be mentioned.

Furthermore, as examples of the base material containing O, polymer resins containing main chains including aromatic or heterocyclic rings, and side chains including carboxylic acid groups, hydroxyl groups, or the like can also be mentioned.

In a subsequent step, solid contents in the solution are separated by way of filtration. The separated solid contents are washed based on alcohols or the like, and then, are dried, thereby obtaining the structure shown in FIG. 3C, namely the metal-particle-supported carbon material 162, in which the underlayer 152 is formed on the metal-particle-supported carbon material 161.

The reason why the resulting product is washed by alcohols or the like is because excess base materials for the underlayer 152, which have adhered onto the metal-particle-supported carbon material 161, are washed away.

### (iii) Forming an ionomer-based layer

As shown in the part of "C" in FIG. 4, the the metal-particle-supported carbon material 162, in which the above-mentioned underlayer 152 has been formed, is dispersed into a solvent 133. Then, an ionomer 153 is added to the resulting solution, and then, is stirred at a certain temperature for a predetermined period of time.

The above-mentioned techniques may be employed for the stirring step. However, stirring techniques used therefor are not particularly limited.

The stirred solution may be coated onto a polymer membrane based on spray or die coating methods, or screen-printing methods, and then, is dried.

In this way, the structure shown in FIG. 3D is formed.

That is, a catalyst layer 163 that is a carbon-based aggregate formed in a membrane-like shape is produced. In this catalyst layer 163, the ionomer-based layer 153 is formed on the metal-particle-supported carbon material 162 including the under layer 152.

The above-described production method is considered as a basic production method, and also, is referred to as "first production method" for the sake of convenience.

### (Second production method)

Upon production of catalyst layer through the above-described steps of supporting metal particles on carbon materials, forming an underlayer, and forming an ionomer-based layer, the following variation is possible.

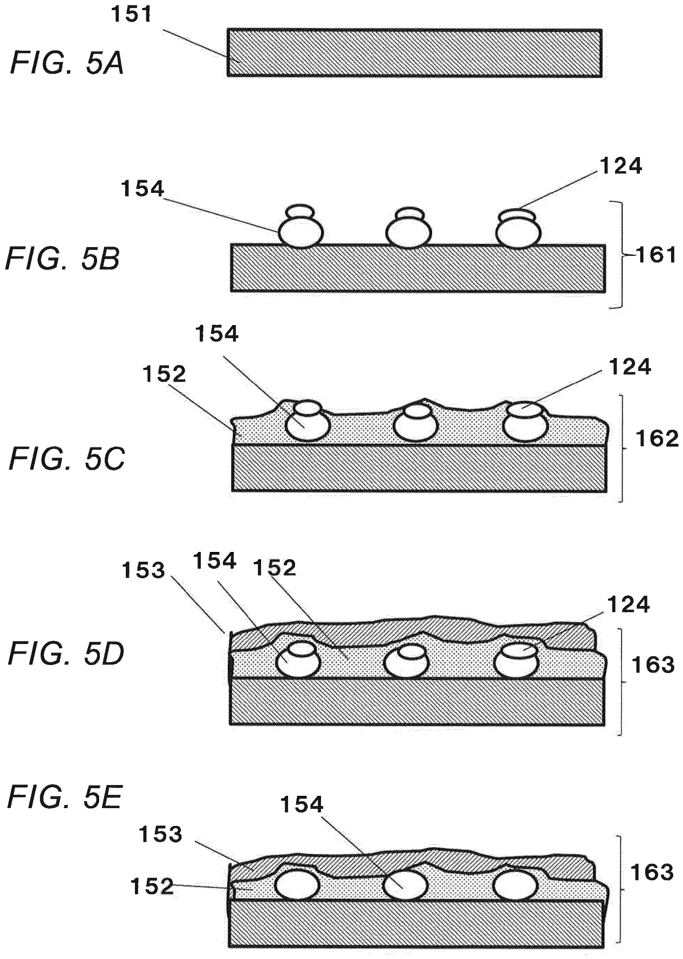

The variations will be described with reference to FIGS. 5A to 6.

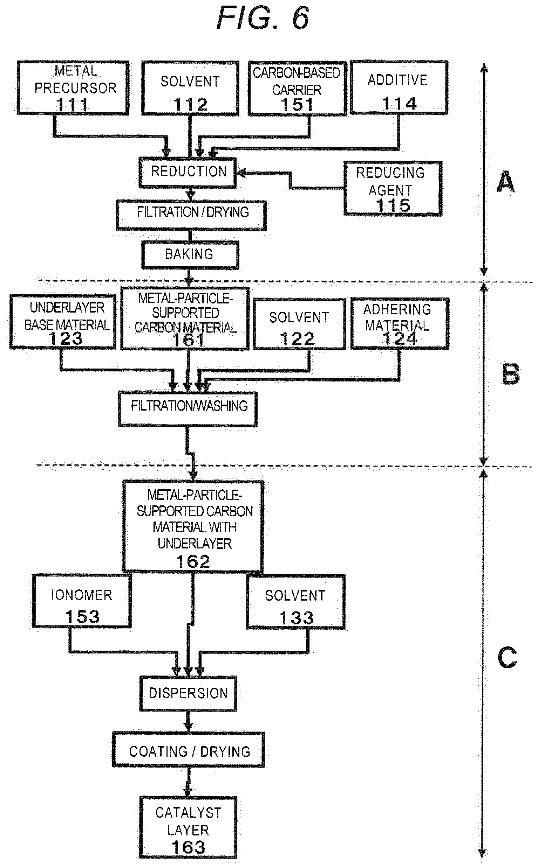

FIGS. 5A to 5E are cross-section views that describe a flow of production of a catalyst layer. FIG. 6 is a flowchart showing production procedures.

The second production method differs from the first production method in the step of forming an underlayer.

The step of supporting metal particles on carbon materials and the step of forming ionomer-based layers are the same between the first and second production methods. Therefore, descriptions on these steps for the second production method will be omitted.

Matters not mentioned in this section may be the same as those described for the first production method.

If a thick underlayer 152 is formed on a carbon-based carrier 151 and metal particles 154, the thick underlayer 152 may impede reactants (e.g., oxygen and hydrogen gases) required for power generation in a fuel cell from reaching the metal particles 154.

Therefore, it would be effective that the underlayer 152 is as thin as possible. Alternatively, it would also be effective that fine voids, through which the reactants can reach the metal particles 154, are present in the underlayer 152, in order to improve the catalyst activity.

Therefore, the second production method is provided with the following features.

### <Differences between the first and second methods>

When a underlayer base material 123 is brought into contact with the metal-particle-supported carbon material 161 in the step of forming an underlayer ("B" in FIG. 6), an adsorptive material 124 that more easily adsorbs onto the metal particles 154 than the solvent 122 does is added to the reaction solution in the second production method.

As shown FIG. 5B, the adsorptive material 124 adsorbs onto a part of surface of each metal particle 154.

This brings about effects to suppress the underlayer 152 from adhering onto the metal particles 154 to some degree.

In that case, a type of the adsorptive material 124 is not particularly limited as long as the adsorptive material 124 easily adsorbs onto the metal particles 154, and is easily removed therefrom in the subsequent steps of washing and baking. In general, compounds intramolecularly possessing N and/or O, for example, in forms of NO, CO, alcohols, or amines, may be used because such compounds are likely to adsorb onto metals.

In addition, the adsorptive material 124 moves into the solvent 122 before/after the step of forming the underlayer, and thus, is not present in the resulting catalyst layer (FIG. 5E).

Subsequently, the step of forming an ionomer-based layer is carried out as described in FIG. 6C.

### (Third production method)

In the third production method, some parts of the first production method are modified in the same manner as the second production method.

Matters not mentioned for the third production method may be the same as the first production method.

### <Differences between the first and third methods>

In the step of forming an under layer ("B" in FIG. 6) in the third production method, the metal-particle-supported carbon material 161 is brought into contact with at least two solutions that have been obtained by dissolving into solvents 122 base materials 123 for the underlayer, and that each have different concentrations of the base materials 123.

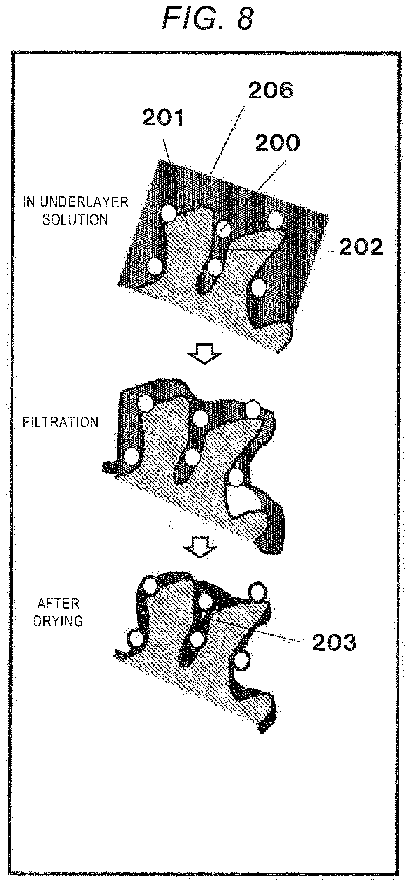

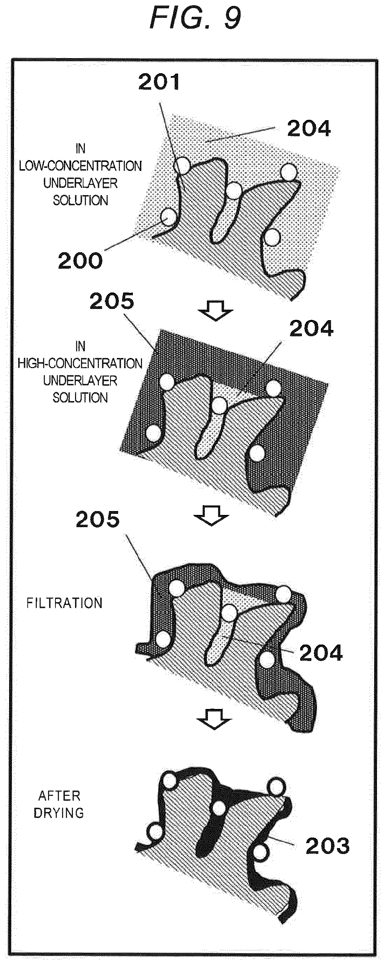

The mechanism will be described with reference to FIGS. 8 and 9.

When a carbon material having a larger surface area (e.g., carbon black) is particularly employed as a carbon-based carrier 151, fine pores are present on a surface of the carbon material. In this case, the underlayer 152 may penetrate into the pores, and thus, the metal particles 154 present in the pores may be embedded within the penetrated underlayer 152. The third production method solves the above phenomenon.

### EXAMPLES

Examples of catalyst layers according to present embodiments, and Comparative Examples will further be shown below.

### [Example 1]

One example for the first production method, which is a basic production method in the disclosure, will be shown below.

### (i) Supporting metal particles onto a carbon-based carrier

At first, hydrogen hexachloroplatinate (IV) hexahydrate (H₂PtCl₆·6H₂O) was used for a metal precursor 111, and ethylenediamine was used for an additive 114 serving as a complexing agent.

A mixing molar ratio of the metal precursor 111 and the additive 114 was from 1:2 to 1:10, and these materials were dissolved in an water/ethanolmixture solution (solvent 123) with a ratio from 1:0.1 to 1:0.4 (water:ethanol).

The resulting mixture solution was stirred at 30-50°C for 12-24 hours.

Next, for a carbon material 113, Ketjen black EC (Lion Corporation), which has a larger surface area, was used.

The surface area of the carbon material 113 was from 500-1000 m²/g.

In addition, in order to improve dispersibility of the carbon material 113, a surfactant may be added to the mixture solution.

Additionally, nitric acid and sodium hydroxide were used as pH adjusting agent to maintain the mixture solution at a predetermined pH.

Then, hydrazine serving as a reducing agent 115 was added to the stirred mixture solution, and then, the resulting solution was further stirred for a predetermined period of time, thereby reducing platinum. In this way, metal particles 154 were supported onto a carbon material 113, and thus, a metal-particle-supported carbon material 161 was produced in the solution.

Subsequently, the metal-particle-supported carbon material 161 was separated by way of filtration, and then, was washed and dried to obtain the metal-particle-supported carbon material 161.

Residues of base materials adhering onto the obtained metal-particle-supported carbon material 161 were washed away by use of a solvent, and then, the metal-particle-supported carbon material 161 was dried at 30-90°C under vacuum.

Additionally, the obtained metal-particle-supported carbon material 161 was baked in an inert atmosphere in order to prevent the carbon material from burning.

### (ii) Forming an underlayer

Polybenzimidazole was used as an underlayer base material 123, and N-methylpyrrolidone (NMP) was used as a solvent 122.

A solution obtained by dissolving polybenzimidazole in NMP, and the above metal-particle-supported carbon material 161 were mixed.

In this case, it is important that the metal-particle-supported carbon material 161 is dispersed into the solution to bring polybenzimidazole into contact with a surface of the metal-particle-supported carbon material 161.

In this point, ultrasonic irradiation will bring about effects to promote dispersion of the metal-particle-supported carbon material 161, and also, effects to bring polybenzimidazole into contact with fine parts of the surface of the carbon material.

Additionally, a concentration of polybenzimidazole dissolved in NMP may be adjusted depending on desirable thickness of the underlayer 152.

Then, the resulting solution was stirred at 25-40°C for one hour. Then, a solid content was separated by way of filtration, and then, was washed and dried, thereby obtaining an underlayer-formed metal-particle-supported carbon material 131.

In this case, as needed, the solid content may be washed with NMP or other solvents.

### (iii) Forming an ionomer-based layer

The above-described underlayer-formed metal-particle-supported carbon material 131 was dispersed into a water/ethanol mixture solution, serving as a solvent 133.

Then, Nafion (Du Pont), which is a proton-conducting resin (serving as an ionomer 153), was added to the solution, and the resulting mixture solution was stirred.

In that case, the amount of Nafion added thereto was from 0.3 to 1.0 in terms of weight ratio relative to the carbon material in the underlayer-formed metal-particle-supported carbon material.

The resulting solution was coated onto the underlayer-formed metal-particle-supported carbon material, and then, the resulting product was dried to produce a catalyst layer 163.

### [Comparative Example 1]

The structure disclosed in JP-A-2013-179030 (shown FIG. 10A), i.e., a catalyst layer obtained by supporting metal particles 154 onto the layer structure after the underlayer 152 was formed, was adopted.

In detail, the step referred to as "A" in FIG. 4, and the step referred to as "B" in FIG. B were carried out in reverse order in the first production method, thereby producing the catalyst layer.

More specifically, the carbon material 151, and an underlayer base material 123 were mixed to form the underlayer 152 on the carbon material 151.

Then, the resulting structure in which the underlayer 152 was provided on the carbon material 151 was added to a solution of a metal precursor 111 and a solvent 112.

Accordingly, metal particles 154 were supported onto the underlayer 152, which was provided on the carbon material 113.

### [Comparative Example 2]

Comparative Example 2 is a case of Comparative Example 1 in which the underlayer 152 is not used. Otherwise, Comparative Example 2 is the same as Comparative Example.

### [Example 2]

A catalyst layer was prepared based on the second production method in which the following procedure was additionally carried out in the step of forming an underlayer in the first production method.

Alcohols were added to the mixture solution as adsorptive materials 124. The alcohols serve as ingredients that adsorb onto metals in NMP.

The alcohols employed in this example were methanol, ethanol, and isopropyl alcohol.

In addition, the alcohols were mixed thereinto at 100:1 to 100:20 in terms of volume-based ratios relative to NMP.

### [Example 3]

A catalyst layer was prepared based on the third production method in which the following procedure was additionally carried out in the step of forming an underlayer in the first production method.

The metal-particle-supported carbon material 161 was brought into contact with a 1-10wt% polybenzimidazole NMP solution, and then, was further brought into contact with a 10-25wt% polybenzimidazole NMP solution. Thus, the metal-particle-supported carbon material 161 was treated in two stages using the two types of solutions having different concentration of polybenzimidazole.

### [Conditions for evaluation on power generation using evaluation fuel cells]

The catalyst layer 163 was employed to produce the fuel cell in the above-described embodiments.

Conditions for evaluation on power generation are as follows. A cell temperature was 80°C, dew-point temperatures of the cathode and the anode were 65°C, oxygen and hydrogen use efficiencies were adjusted to 50-70%, and a voltage between the cathode and the anode was measured when power generation was carried out at a current density of 0.25 mA/cm².

The reason why the current density was set to 0.25 mA/cm² was because such a current density was possible in household fuel cells.

However, the current density is not particularly limited in the present disclosure.

Additionally, while start and halt of power generation were repeated, changes in the power generation voltage were observed at the current density of 0.25 mA/cm², and thus, endurance power-generation voltages were measured.

Results are shown in Table 1.

**Table 1**

| | Comparative Example 1 | Example 1 | Example 2 | Example 3 |
|---|---|---|---|---|
| | The step of forming an underlayer and the step of supporting metal particles are reversed. | First production method | Second production method | Third production method |
| Initial properties | Fair | Good | Excellent | Excellent |
| Durability | Good | Good | Good | Excellent |
| Overall evaluations | Unacceptable | Acceptable | Acceptable | Acceptable |

With respect to Comparative Example 1, and Examples 1-3, power-generation voltages measured at the current density of 0.25 mA/cm², corresponding to initial properties, will be compared with Comparative Example 2.

Samples in which some increases in the voltage were observed were evaluated as good; samples in which significant increases in the voltage were observed were evaluated as excellent; samples in which there were almost no changes in the voltage were evaluated as fair; and samples in which reductions in the voltage were observed were evaluated as inferior.

In addition, the above-mentioned reference corresponded to a sample in which metal particles were supported directly onto a carbon material based on a general method. In other words, there was no underlayer 152, and the metal particles were covered with only an ionomer-based layer 153.

Furthermore, for purposes of evaluations on durability, variations of power-generation voltages for used fuel cells (amounts of decreases in voltages/initial voltages) were compared with that of Comparative Example 2. Cases in which some increases in voltages were observed were evaluated as good; cases in which significant increases in voltages were observed were evaluated as excellent; cases in which there were almost no changes in voltages were evaluated as fair; and cases in which the voltages were reduced were evaluated as inferior.

Samples in which power-generation voltages of initial properties, and power-generation voltages for durability evaluations were improved compared with Comparative Example 2 were evaluated as acceptable for overall evaluations, while samples in which any improvements in these voltages were not observed were evaluated as unacceptable.

### <Results and observation>

Evaluation results on power generation properties of fuel cells using as cathodes catalyst layers prepared in Comparative Example 1 and Examples 1-3 are summarized in Table 1. Observations on the evaluation results are as follows.

As compared with the reference, Comparative Example 1 exhibited reductions in initial power-generation voltages, while there was a tendency of the durability to improve.

The reason would be considered as follows. That is, sulfonic acids of the ionomer-based layer 153 adsorbed onto surfaces of metal particles 154, and thus, reactions of reactants on the surfaces of metal particles 154 were inhibited. As consequence, the power-generation voltage was reduced.

Furthermore, it is considered that changes in the voltages after the durability test were reduced because an underlayer 152 was formed on a surface of the carbon-based carrier 151, effects to prevent detachment of metal particles 154 due to deteriorations in the surface of the carbon material were achieved during the durability test.

### <Example 1>

Next, as compared with Comparative Example 1, Example 1 exhibited a tendency of the initial voltage to improve.

The reason would be considered as follows. That is, since an underlayer 152 was formed between metal particles 154 and an ionomer-based layer 153, reductions in the power-generation voltage due to adsorption of sulfonic acids of the ionomer-based layer 153 were suppressed.

Furthermore, Example 1 exhibited a tendency to improve changes in the voltages after durability test.

The reason would be considered as follows. That is, since the metal particles 154 were covered with the underlayer 152, the presence of the underlayer 152 brought about effects in which N or O atoms constituting the underlayer 152 captured metal ions caused from ionization of metal atoms of metal particles 154 during the durability test.

It was deduced that any enlargement due to dissolution and redeposition of metal particles 154 was consequently prevented.

### <Example 2>

Hereinafter, Example 2 will be discussed in comparison with Example 1.

Example 2 exhibited a tendency in which power-generation voltages of initial properties were improved, compared with Example 1.

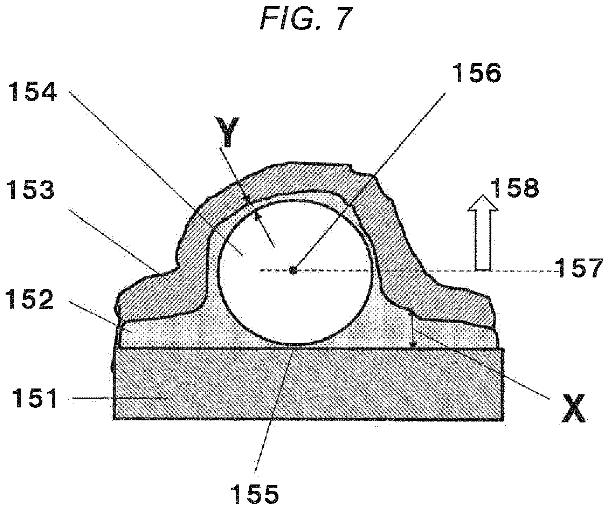

The reason will be described with reference to FIG. 7.

FIG. 7 is a cross-section view of the catalyst layer, showing states of the underlayer 152 and the ionomer-based layer 153 around a metal particle 154.

Since a material adhering to the metal particles 154 (e.g., alcohols) was added to the solution in the step of forming an underlayer, voltages of initial properties were improved.

The reason is considered as follows. That is, use of the adsorptive material 124 in the production step resulted in a smaller thickness of the underlayer 152 over the metal particle 154 as shown in FIG. 7.

More specifically, a part of the underlayer 152 occupies an area over a surface of the metal particle 154 supported onto the carbon-based carrier 151. In this case, the surface of the metal particle 154 refers to a surface opposite to an interface 155 between the metal particle 154 and the carbon-based carrier 151. In other words, the above-mentioned area over the surface of the metal particle 154 refers to an upper area 158 at the opposite side of a line 157 from the interface 155, supposing that the line 157 passes through a median point 156 of the metal particle 154 in parallel with the surface of the carbon-based carrier 151, which forms the interface together with the metal particle 154.

The part of the underlayer 152 is thinner in the upper area 158 between the metal particles 154 and the ionomer-based layer 153.

Alternatively, it would be considered that fine micropores that made it easier for an oxygen gas (i.e., one of reactants required for power generation) to diffuse therethrough were formed in the underlayer 152, thereby improving power-generation voltages.

In other words, it is considered that, when produced catalyst layers partially satisfy a relationship in which the thickness of the underlayer 152 over the metal particles 154 ("Y" in FIG. 7) is smaller than the thickness of the underlayer 152 over the carbon-based carrier 151 ("X" in FIG. 7), effects to improve power-generation voltages are achieved.

The thickness Y is preferably equal to or smaller than half the thickness X.

In FIG. 7, the thickness of the ionomer-based layer 153 covering the metal particle 154 is approximately constant.

The thickness of the underlayer 152 in the upper area 158 is approximately constant while it is thinner as described above.

Such a structure realizes properties described below.

### <Example 3>

Finally, Example 3 will be discussed in comparison with Example 2.

When two types of solutions in which base materials for the underlayer 152 are dissolved at different concentrations are employed in the step of forming an underlayer, it will be observed that initial properties are improved.

A putative mechanism for the effects will be explained with reference to FIGS. 8 and 9.

FIGS. 8 and 9 are diagrams that show putative mechanisms for behaviors in solutions for underlayers 152 in pores on surfaces of carbon-based carriers 151 in Example 2, in which one type of underlayer base material solution with a certain concentration of the base material was employed, and Example 3, in which two types of underlayer base material solutions with different concentrations of base materials were employed, respectively.

At first, in the case of FIG. 8 in which the one type of underlayer base material solution was employed, the base material solution 206 for forming the underlayer 203 penetrates into a pore 202 in the carbon material 201 supported with metal particles 200.

Even when the resulting product is subjected to filtration, a large amount of the solution 206 remains within the pore due to surface tension.

Consequently, if the resulting product is dried without any treatments, a thicker underlayer 203 is easily formed within the pore 202.

As a result, the metal particles 200 in the pores are embedded in the underlayer 203, and thus, the metal particles 200 become difficult to contribute to power generation.

On the other hand, in the case of FIG. 9 in which the two types of base material solution with different concentration of the base materials were employed, the low-concentration solution 204 with a lower concentration of the base material penetrates into a pore 202 in the carbon material 201, and then, the resulting material is soaked in a high-concentration solution 205 with a higher concentration of the base material. In that case, the low-concentration solution 204 is hardly replaced with the high-concentration solution 205.

Accordingly, through the subsequent filtration and drying steps, a thinner underlayer 203 can be formed within the pores 202, and thus, metal particles 200 within the pores 202 can contribute to power generation. It is deduced that the power-generation voltages were improved in this way.

Additionally, it is considered that the carrier of carbon material has a larger surface area, i.e., has more pores on the surface, the more significant effects can more remarkably be obtained.

Therefore, it is considered that the effects are obtained when carbon materials having surface areas from about 500 m²/g to about 1000 m²/g are used.

Catalyst layers, and production methods thereof according to the disclosure are applicable to fields of catalyst layers used for purposes of electrodes in polymer electrolyte fuel cells, hydrogen production based on water electrolysis, hydrogen production based on photocatalysts, etc.

## Claims

1. A catalyst layer, comprising:
a carrier;
metal particles located over the carrier;
an underlayer located on the carrier; and
an ionomer-based layer located over the underlayer, wherein
the underlayer includes a polymer material, and covers at least parts of the metal particles, and
the ionomer-based layer includes a proton-conducting resin.

2. The catalyst layer according to claim 1, wherein the underlayer is comprised of a material having an N or O atom, and an aromatic ring.

3. The catalyst layer according to claim 1, wherein the proton-conducting resin has a sulfonate group in a side chain.

4. The catalyst layer according to claim 1, wherein the carrier is a carbon black with a surface area of about 500 m²/g or higher.

5. The catalyst layer according to claim 1, wherein the metal particles are located so as to come into contact with the carrier, the metal particles are entirely covered with the carrier and the underlayer, and the the underlayer is covered with the ionomer-based layer.

6. The catalyst layer according to claim 1, wherein the underlayer is present between the metal particles and the ionomer-based layer, and between the carrier and the ionomer-based layer.

7. The catalyst layer according to claim 1, wherein a thickness of the underlayer formed between the carrier and the ionomer-based layer is larger than a thickness of the underlayer formed between the metal particles and the ionomer-based layer.

8. The catalyst layer according to claim 7, wherein the thickness of the underlayer formed between the metal particles and the ionomer-based layer is equal to or smaller than half the thickness of the underlayer formed between the carrier and the ionomer-based layer.

9. The catalyst layer according to claim 1, wherein a part of the ionomer-based layer covering the metal particles has an approximately constant thickness.

10. The catalyst layer according to claim 1, wherein the underlayer has an approximately constant thickness within areas above the metal particles.

11. A fuel cell electrode, comprising the catalyst layer according to claim 1.

12. A fuel cell, comprising the catalyst layer according to claim 1.

13. A method for producing a catalyst layer, comprising:
(i) bringing at least one first solution including a polymer material into contact with a metal-particle-supported carrier to form an underlayer; and
(ii) then bringing a second solution including a proton-conducting resin into contact with the metal-particle-supported carrier subjected to Step (i) to coat said metal-particle-supported carrier with the proton-conducting resin.

14. The method according to claim 13, wherein the at least one first solution includes an adhering material that easily adsorbs onto the metal particles.

15. The method according to claim 13, wherein two solutions including different concentrations of the polymer material are used as the at least one first solution in Step (i).
